# EUROPEAN PATENT APPLICATION

(11) **EP 2 264 683 A1**
(43) Date of publication of application: **22.12.2010**
(21) Application number: 10005706.6
(22) Date of filing: 01.06.2010
(51) Int. Cl.: G08G 1/16, B60K 31/00, B60W 30/14, B60W 30/18

(54) **Driving support device and program**

(30) Priority: 15.06.2009 JP 2009142311
(71) Applicant: Aisin AW Co., Ltd., Anjo-shi Aichi-ken, 444-1192 (JP)
(72) Inventor: Miura, Naoki, Anjo-shi Aichi-ken 444-1192 (JP); Nonomura, Junichi, Anjo-shi Aichi-ken 444-1192 (JP); Ueno, Yusuke, Anjo-shi Aichi-ken 444-1192 (JP)
(74) Representative: Kramer - Barske - Schmidtchen

(57) **Abstract**

The driving support device detects an other-vehicle traveling ahead in a first lane where a host-vehicle is traveling (S101: YES), if it is predicted that the other-vehicle continues traveling along a road where the other-vehicle is traveling (S102: YES), identifies the other-vehicle as a target vehicle (S103), and executes left-hand overtaking determination processing (S104). If the host-vehicle 2 has lane-changed to a second lane that is not close to a center of the road compared to a first lane, passed the target vehicle, and lane-changed to the first lane ahead of the target vehicle within a predetermined time, such overtaking operation is determined as a dangerous operation (S106). Thus, if the overtaking operation is not appropriate, it is determined that the overtaking operation is the dangerous operation. Therefore, the overtaking operation is properly evaluated.

## Description

The present invention relates to a driving support device and a program that evaluate driving and support the driving of a driver.

Conventionally, a system is known, in which it is evaluated whether or not the driving performed by the driver while traveling was appropriate. For example, in a technology disclosed by JP-A-2008-186045, whether or not a vehicle speed while traveling, a braking timing, an inter-vehicle distance, and the like are appropriate is evaluated and ranking and scoring are performed.

Here, when evaluating the driving, it is also necessary to evaluate an overtaking operation while traveling.
For example, when a vehicle overtakes a preceding vehicle in a road with two lanes each way in Japan, the vehicle needs to overtake the preceding vehicle traveling in a driving lane that is a lane on the left side, through an overtaking lane that is a lane on the right side, and get back to the driving lane after completing the overtaking. Therefore, driving operation of overtaking a vehicle that is traveling in the overtaking lane through the driving lane obstructs an original traffic flow and brings a danger. However, in the technology disclosed by JP-A-2008-186045, such overtaking operation is not target for the evaluation.
In order to solve the aforementioned problem, it is an object to provide a driving support device and a program that can perform the evaluation for the overtaking operation.

This object is achieved by a driving support device according to claim 1, a driving support method according to claim 7 and a driving support program according to claim 13. Further developments are given in the dependent claims.

According to a first aspect, for the overtaking operation to overtake the target vehicle as the other-vehicle that is predicted to continue traveling along the road where the other-vehicle is traveling, whether or not the overtaking operation is appropriate is judged based on the position relation of the lane where the host-vehicle traveled during the overtaking operation. If it has been judged that the overtaking operation is not appropriate, it is determined that the overtaking operation is the dangerous operation. Therefore, the overtaking operation is properly evaluated. Consequently, through giving appropriate feedback of driving evaluation to a driver, the technique of the driver can be improved.

According to a second aspect, the overtaking operation through the lane that is not close to the center of the road compared to the first lane can be determined as the dangerous operation. For example, the lane that is not close to the center of the road corresponds to a left-hand lane where the left-hand traffic is in force (such as Japan).

According to a third aspect, the driving support device enables to properly predict whether or not the other-vehicle continues traveling along the road where the other-vehicle is traveling.

According to a fourth aspect, the driving support device enables to properly predict whether or not the other-vehicle continues traveling along the road where the other-vehicle is traveling.

Further features and usabilities follow from the description of embodiments referring to the drawings of which:

FIG. 1 shows a block diagram showing a structure of a driving support device according to an embodiment.

FIG. 2 is a flowchart showing driving evaluation processing according to the embodiment.

FIG. 3 is a flowchart showing left-hand overtaking determination processing according to the embodiment.

FIG. 4 explains a specific example of the driving evaluation processing according to the embodiment.

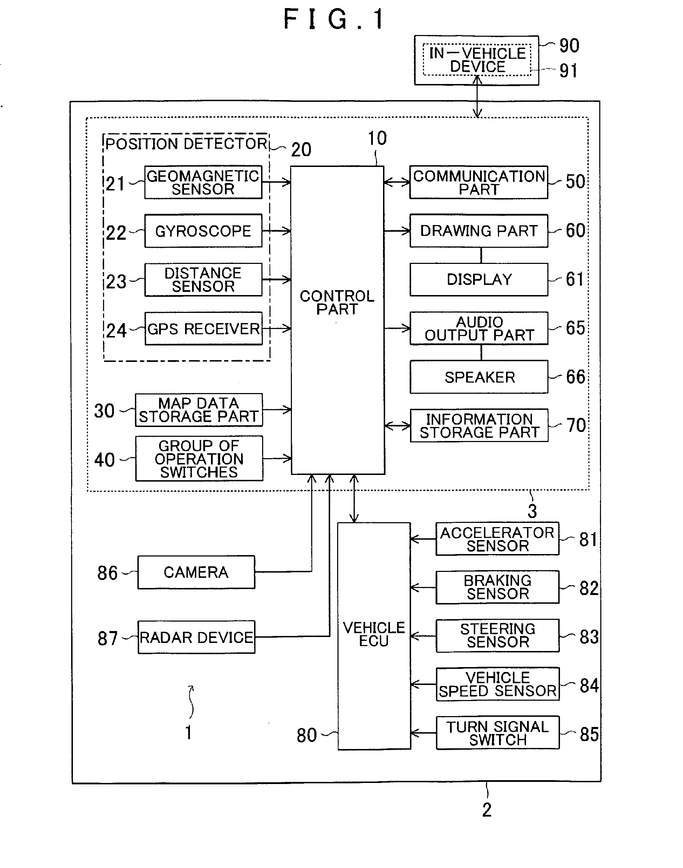

FIG. 1 is a block diagram showing an overall structure of a driving support device 1 according to an embodiment. The driving support device 1 is installed in a host-vehicle 2 and includes a navigation device 3, a vehicle ECU 80, a camera 86, a radar device 87, and the like.

The navigation device 3 includes a control part 10, a position detector 20, a map data storage part 30, a group of operation switches 40, a communication part 50, a drawing part 60, an audio output part 65, an information storage part 70, and the like. The control part 10 is structured in the center and connected to the position detector 20, the map data storage part 30, the group of operation switches 40, the communication part 50, the drawing part 60, the audio output part 65, and the information storage part 70.
In addition, the control part 10, which is configured as a normal computer, includes a CPU, a ROM, an I/O, and a bus line for connecting these members.

The position detector 20, which detects position information relating to a current position of a vehicle, includes a geomagnetic sensor 21, a gyroscope 22, a distance sensor 23, a GPS (Global Positioning System) receiver 24 that receives electric waves from satellites, and the like, all of which are well-known units. These units 21 to 24 have different kinds of errors; therefore, they are used with mutual compliment. The position information is detected as coordinate information.

The map data storage part 30 is a storage device that is realized for example as a hard disk device (a HDD). The HDD is utilized in the present embodiment; however, another medium such as a memory card may be utilized. The map data storage part 30 stores so-called map matching data for improvement of a position detection accuracy of the vehicle and map data for performing route search and route guidance. In road information included in the map data, a branch point such as an intersection, a merging point, and the like are defined as a node, and a road is defined as a link connecting nodes. For each link, a travel direction, a distance, the number of lanes, a road attribute, presence or absence of a center divider, and the like are defined as attribute information, which is associated with a link ID identifying each link. In addition, the map data includes branch information, which is associated with directions in which the vehicle can proceed after passing the branch point, for each branch point (each node) such as an intersection and a junction that has a plurality of directions in which the vehicle can proceed or for each lane of the link before the branch point. Further, the map data includes facility information relating to facilities. Specifically, the facility information is POI (Point Of Interest) information, which is associated with an ID identifying a facility and stored. The POI information includes a facility name, an address, a category, data specifying an area, and the like.

The group of operation switches 40, which includes a touch switch or a mechanical switch integrated with a display 61, a remote control device, and the like, is used for various kinds of input.
The communication part 50 is a configuration for performing inter-vehicle communication with an in-vehicle device 91 installed in an other-vehicle 90. The in-vehicle device 91 has the same configuration as the navigation device 3, and the explanation is omitted. FIG. 1 indicates only one other-vehicle 90; however the communication part 50 is communicable with a plurality of vehicles.

The drawing part 60 is connected to the display 61. The display 61 is a color display using liquid crystal or a CRT. Information display is executed through the display 61.
The audio output part 65 is connected to a speaker 66, through which guidance by audio is performed.

The information storage part 70 stores information acquired from the position detector 20, the communication part 50, the vehicle ECU 80, the camera 86, the radar device 87, and the like, and is configured with a HDD as used for the map data storage part 30. Naturally, another medium such as the memory card may be utilized. Or, the same HDD utilized for the map data storage part 30 may be utilized. The information storage part 70 stores information relating to operations of the host-vehicle 2 and information relating to the other-vehicle 90. The information relating to operations of the host-vehicle 2 includes information relating to a vehicle speed, information relating to a lane change, and the like. The information relating to the vehicle speed is acquired from the vehicle ECU 80. The information relating to the lane change is information that identifies the lane where the host-vehicle 2 traveled based on the position information detected by the position detector 20 and lane information stored in the map data storage part 30. The information relating to the other-vehicle 90 includes the position information of the other-vehicle 90, vehicle speed information relating to the vehicle speed, information relating to lighting of a direction indicator, route information relating to a destination and a route to the destination, and the like, and is associated with a vehicle ID of the other-vehicle 90 and stored. These information is acquired by the communication part 50, the camera 86, and the radar device 87.

The vehicle ECU 80 controls operations of an engine, a transmission, an accelerator, a braking, and the like. The vehicle ECU 80, which is configured as a normal computer as the control part 10, includes the CPU, the ROM, the I/O, and the bus line for connecting these members. The vehicle ECU 80 is connected to an accelerator sensor 81 that detects a pressing level of an accelerator pedal, a braking sensor 82 that detects the pressing level of a brake pedal, a steering sensor 83 that detects a rotation angle of a steering wheel, a vehicle speed sensor 84 that detects a speed of a vehicle, a turn signal switch 85, and the like.

The camera 86 using a solid-state image sensing device such as a CCD, is configured so as to be able to capture images in all directions outside the vehicle. The acquired image information is stored in the information storage part 70.
The radar device 87 includes an electric wave transmitting part and an electric wave receiving part. The radar device 87 transmits electric waves ahead of the host-vehicle 2 with the electric wave transmitting part and receives reflected electric waves reflected by an object in front with the electric wave receiving part, and then detects a distance and a relative speed to the object in front based on a time from transmitting to receiving, and the like. If the object in front is a vehicle, the distance to the object is acquired as inter-vehicle distance information.

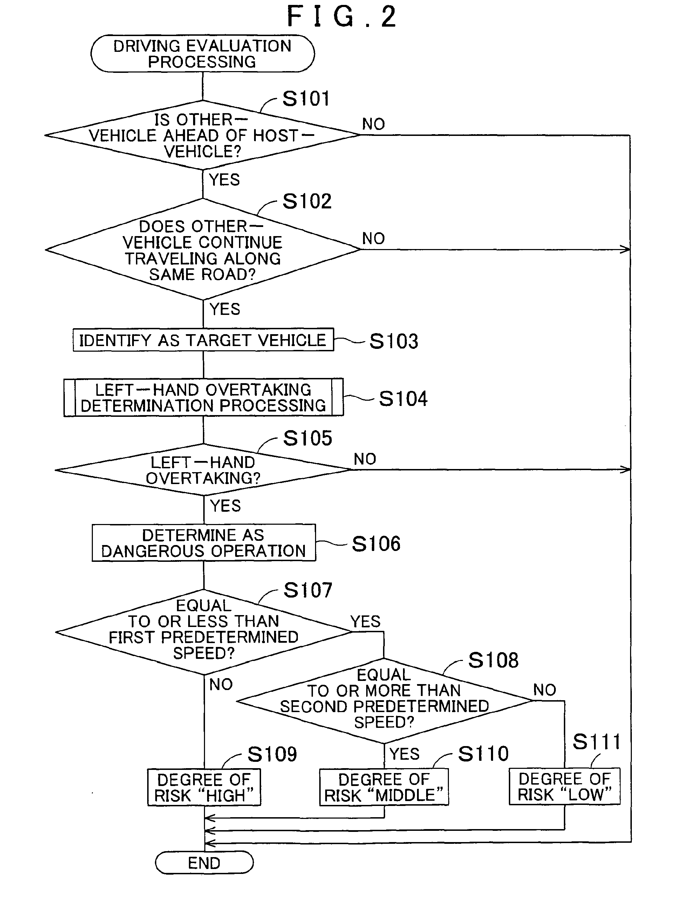

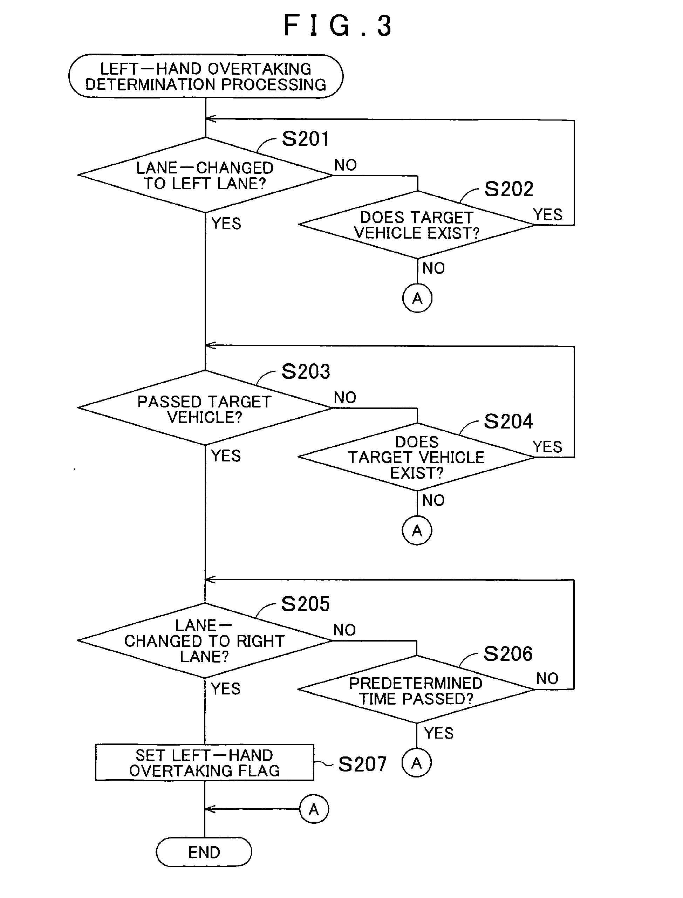

The present embodiment is **characterized in that** an overtaking operation is properly evaluated. Here, driving evaluation processing is described with reference to flowcharts in FIGS. 2 and 3. The flowcharts in FIGS. 2 and 3 indicate the driving evaluation processing for evaluating the overtaking operation that the host-vehicle 2 overtakes the other-vehicle 90 when the host-vehicle 2 travels along a road where there is a plurality of lanes on either side and overtaking through a lane on the left side is prohibited.

The driving evaluation processing indicated in FIG. 2 is executed at intervals of a predetermined time, for example every 100 msec., while the vehicle 2 is traveling. At a first step S101 (hereinafter, "step" is omitted and referred to as only "S"), it is judged whether or not the other-vehicle 90 exists within a first predetermined area ahead, for example within 300m ahead, in a first lane where the host-vehicle 2 travels (hereinafter, referred to as "pre-overtaking lane"). This is judged based on the position information of the other-vehicle 90 acquired by the communication part 50. At the same time, the vehicle ID of the other-vehicle 90 is acquired. If the other-vehicle 90 does not exist within the first predetermined area ahead of the host-vehicle 2 (S101:NO), the processing at S102 and subsequent steps are not executed. If the other-vehicle 90 exists within the first predetermined area ahead of the host-vehicle 2 (S101:YES), the procedure goes to S102. Hereinafter, determination is executed toward the overtaking operation of overtaking the other-vehicle 90 that is closest to the host-vehicle 2 among the other-vehicles 90 within the first predetermined area ahead of the host-vehicle 2. However, if a plurality of vehicles exist within the first predetermined area ahead of the host-vehicle 2, the same processing may be executed toward each vehicle.

At S102, it is judged whether or not it is predicted that the other-vehicle 90 continues traveling along a road where the other-vehicle 90 is traveling (hereinafter, referred to as "traveling road"). Here, the judgment is performed based on the road information stored in the map data storage part 30. Specifically, it is predicted that the other-vehicle 90 continues traveling along the traveling road if there is no node indicating a branch point within a second predetermined area, for example, within 500m, ahead of the host-vehicle 2. The second predetermined area is set larger than the first predetermined area. The "traveling road" in the present embodiment is not limited to the so-called link, but may be an aggregate of consecutive links in case of traveling following a road.
If it is predicted that the other-vehicle does not continue traveling along the traveling road (S102: NO), the processing at S103 and subsequent steps is not executed. If it is predicted that the other-vehicle 90 continues traveling along the traveling road (S102: YES), the procedure goes to S103.

At S103, the other-vehicle 90 is determined as a target vehicle. For the determined target vehicle, the information relating to the target vehicle is acquired and stored in the information storage part 70. The information relating to the target vehicle, which includes the position information, the vehicle speed information, the information relating to the lighting of the direction indicator, the route information, and the like, is acquired in a processing separate from the present processing at intervals of a predetermined time, for example, 100 msec. until the present processing terminates.

At S104, a left-hand overtaking determination is executed toward the target vehicle determined at S103.
Left-hand overtaking determination processing executed here is described with reference to the flowchart indicated in FIG. 3.
At S201, it is judged whether or not the host-vehicle 2 has lane-changed to a second lane on the left side (hereinafter, referred to as "left lane") in relation to the pre-overtaking lane. The judgment of whether or not the host-vehicle 2 has lane-changed to the left lane in relation to the pre-overtaking lane is executed based on the position information and the lane information of the host-vehicle 2. If the host-vehicle 2 has lane-changed to the left lane in relation to the pre-overtaking lane (S201: YES), the procedure goes to S203. If the host-vehicle 2 has not lane-changed to the left lane in relation to the pre-overtaking lane (S201: NO), the procedure goes to S202. The left lane to which the host-vehicle 2 has lane-changed from the pre-overtaking lane corresponds the "second lane" and a "lane that is not close to the center of the road compared to the first lane".

At S202, it is judged whether or not the target vehicle exists within the first predetermined area (for example, within 300m) in the pre-overtaking lane ahead of the host-vehicle 2. If the target vehicle does not exist within the first predetermined area in the pre-overtaking lane ahead of the host-vehicle 2 (S202: NO), the processing at S203 and subsequent steps is not executed and the left-hand overtaking determination processing is terminated. The condition of if the target vehicle does not exist within the first predetermined area in the pre-overtaking lane ahead of the host-vehicle 2 is met, for example, in cases such as if the target vehicle has lane-changed, if the target vehicle has gone forward over the first predetermined area, and the like. If the target vehicle exists within the first predetermined area in the pre-overtaking lane ahead of the host-vehicle 2 (S202: YES), the procedure returns to S201.

At S203 to which the procedure goes if the host-vehicle 2 has lane-changed to the left lane in relation to the pre-overtaking lane (S201: YES), it is judged whether or not the host-vehicle 2 has passed the target vehicle. Here, based on the image information acquired by the camera 86, when the front end line of the host-vehicle 2 has got forward compared to the front end line of the target vehicle, it is judged that the host-vehicle 2 has passed the target vehicle. If the host-vehicle 2 has passed the target vehicle (S203: YES), the procedure goes to S205. At this moment, a timer starts timing. In addition, the vehicle speed of the target vehicle of when the host-vehicle 2 has passed the target vehicle is acquired and stored in the information storage part 70. The vehicle speed of the target vehicle may be acquired with the radar device 87 or the communication part 50. If the host-vehicle 2 has not passed the target vehicle (S203: NO), the procedure goes to S204.

At S204, it is judged whether or not the target vehicle exists within the first predetermined area (for example, within 300m) in the pre-overtaking lane ahead of the host-vehicle 2. If the target vehicle does not exist within the first predetermined area in the pre-overtaking lane ahead of the host-vehicle 2 (S204: NO), the processing at S205 and subsequent steps is not executed and the left-hand overtaking determination processing is terminated. The condition of if the target vehicle does not exist within the first predetermined area in the pre-overtaking lane ahead of the host-vehicle 2 is met, for example, in cases such as if the target vehicle has lane-changed, if the target vehicle has gone forward over the first predetermined area, and the like. If the target vehicle exists within the first predetermined area in the pre-overtaking lane ahead of the host-vehicle 2 (S204: YES), the procedure returns to S203.

At S205 to which the procedure goes if the host-vehicle 2 has passed the target vehicle (S203: YES), it is judged whether or not the host-vehicle 2 has lane-changed from the left lane to the pre-overtaking lane ahead of the target vehicle. Whether or not the host-vehicle 2 has lane-changed from the left lane to the pre-overtaking lane ahead of the target vehicle is judged based on the lane information and the position information of the host-vehicle 2 and the target vehicle. If the host-vehicle 2 has lane-changed from the left lane to the pre-overtaking lane ahead of the target vehicle (S205: YES), the procedure goes to S207. If the host-vehicle 2 has not lane-changed from the left lane to the pre-overtaking lane ahead of the target vehicle (S205: NO), the procedure goes to S206.

At S206, it is judged whether or not a predetermined time, for example 30 seconds, has passed since it was judged at S203 that the host-vehicle 2 passed the target vehicle. If the predetermined time has passed (S206: YES), the processing at S207 and subsequent steps is not executed and the left-hand overtaking determination processing is terminated. If the predetermined time has not passed (S206: NO), the procedure returns to S205.

At S207 to which the procedure goes if the host-vehicle 2 has lane-changed to the left lane in relation to the pre-overtaking lane (S201: YES), passed the target vehicle (S203: YES), and lane-changed from the left lane to the pre-overtaking lane ahead of the target vehicle within the predetermined time (S205: YES), a left-hand overtaking flag is set and the left-hand overtaking determination processing is terminated. Note that, in the present embodiment, the operation that the host-vehicle 2 goes forward compared to the target vehicle through a lateral lane is defined as a "passing operation", and a series of operations that the host-vehicle 2 lane-changes behind the target vehicle, passes the target vehicle through the changed lane, and lane-changes ahead of the target vehicle is defined as an "overtaking operation".

Back to FIG. 2, at S105 following the left-hand overtaking determination processing (S104), it is judged whether or not the host vehicle 2 has overtaken the target vehicle determined at S103 through the left side. The judgment here is performed by whether or not the left-hand overtaking flag, which is set at S207, is being set. If the host-vehicle 2 has not overtaken the target vehicle through the left side (S105: NO), that is, if the left-hand overtaking flag is not being set, the processing at S106 and subsequent steps is not executed. If the host-vehicle 2 has overtaken the target vehicle through the left side (S105: YES), that is, if the left-hand overtaking flag is being set, the procedure goes to S106.
At S106, it is determined that the overtaking operation that the host-vehicle 2 has overtaken the target vehicle is a dangerous operation.

At S107, it is judged whether or not the vehicle speed of the target vehicle of when the host-vehicle 2 has passed the target vehicle at S203 is equal to or less than the first predetermined speed. The first predetermined speed is a maximum speed of the traveling road (for example, a legal speed). If the vehicle speed of the target vehicle was not equal to nor less than the first predetermined speed (S107: NO), the procedure goes to S109. If the vehicle speed of the target vehicle was equal to or less than the first predetermined speed (S107: YES), the procedure goes to S108.

At S108, it is judged whether or not the vehicle speed of the target vehicle of when the host-vehicle 2 has passed the target vehicle at S203 is equal to or more than the second predetermined speed. The second predetermined speed is a minimum speed if the minimum speed is stipulated to the traveling road. For example, in case of a highway that is not two-way traffic, the minimum speed is 50km/h. If the minimum speed is stipulated with a signpost or the like, the stipulated speed is followed. In the present embodiment, if the minimum speed is not stipulated, the second predetermined speed is a speed calculated by multiplying the maximum speed of the traveling road by a predetermined factor (for example, 0.6). For example, if the maximum speed of the road is 50km/h, the second predetermined speed is 30km/h. If the vehicle speed of the target vehicle is equal to or more than the second predetermined speed (S108: YES), the procedure goes to S110. If the vehicle speed of the target vehicle is not equal to nor more than the second predetermined speed (S108: NO), the procedure goes to S111.

In the present embodiment, the information previously stored in the map data storage part 30 is utilized for the maximum speed and the minimum speed of the traveling road. However, the information shown in signposts installed on roads and by pavement-marking may be acquired by analyzing an image of the image information acquired by the camera 86. Or, the information of information center (not shown) may be acquired by the communication part 50.

At S109 to which the procedure goes if the vehicle speed of the target vehicle was not equal to nor less than the first predetermined speed (S107: NO), as the host-vehicle 2 overtook the target vehicle traveling at a high speed through the left side, a degree of risk of the overtaking operation to overtake the target vehicle through the left side is determined as "high". Then, the left-hand overtaking flag is reset and the present processing is terminated.
At S110 to which the procedure goes if the vehicle speed of the target vehicle was equal to or less than the first predetermined speed and equal to or more than the second predetermined speed (S107: YES, S108: YES), the degree of risk of the overtaking operation to overtake the target vehicle through the left side is determined as "middle". Then, the left-hand overtaking flag is reset and the present processing is terminated.
At S111 to which the procedure goes if the vehicle speed of the target vehicle was not equal to nor more than the second predetermined speed (S108: NO), as it is assumed that the overtaking operation was performed by necessity to overtake the target vehicle traveling at a very low speed, the degree of risk of the overtaking operation to overtake the target vehicle through the left side is determined as "low". Then, the left-hand overtaking flag is reset and the present processing is terminated.

If it is determined that the overtaking operation is the dangerous operation (S106), a driving evaluation score is calculated by subtracting a point according to the degree of risk from a basic score that is previously set. For example, the points are set as 10 points if the degree of risk is "low" (S111), 20 points if the degree of risk is "middle" (S110), and 40 points if the degree of risk is "high" (S109). If the driving evaluation score becomes lower than a reference score when finishing driving, warning information notifying that the driving evaluation score has become lower than the reference score is provided through the display 61 or the speaker 66.

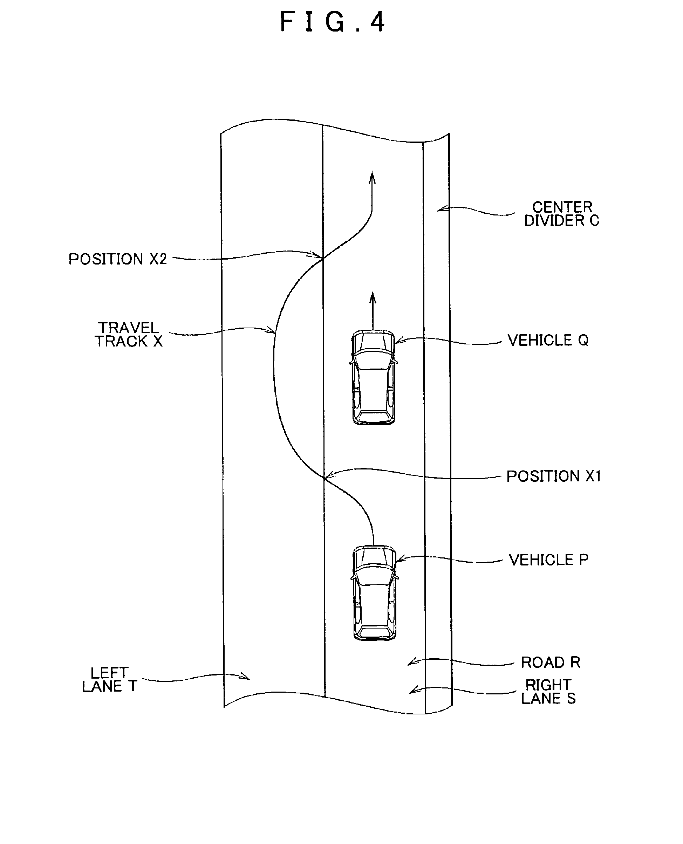

Here, a specific example of driving evaluation processing is described with reference to FIG. 4.
As shown in FIG. 4, it is assumed that a vehicle P provided with the driving support device 1 is traveling in a right lane S of a road R that is a highway with two lanes each way. The road R is formed with a center divider C, and the maximum speed of 100 km/h and the minimum speed of 50km/h are stipulated. There is no node indicating a branch point within 500m ahead of a position where the vehicle P is traveling. In addition, a vehicle Q is traveling within 300m ahead of the vehicle P on the right lane S. As indicated with a travel track X, the vehicle P lane-changes to a left lane T at a position X1, and lane-changes ahead of the vehicle Q in the right lane S at a position X2. The vehicle P corresponds to the host-vehicle 2, the vehicle Q corresponds to the other-vehicle 90, and the road R corresponds to the traveling road.

The vehicle Q is traveling within 300m ahead of the vehicle P (S101: YES). As there is no node indicating a branch point within 500m in the road R, it is predicted that the vehicle Q continues traveling along the road R (S102: YES). Consequently, the vehicle Q is determined as the target vehicle (S103), and the left-hand overtaking determination processing is executed. As indicated with the travel track X, the vehicle P lane-changes from the right lane S to the left lane T at the position X1 (S201: YES), passes the vehicle Q as the target vehicle (S203: YES), and lane-changes again to the right lane S at the position X2 ahead of the vehicle Q (S205: YES) within the predetermined time. Then, the left-hand overtaking flag is set (S207). As the vehicle P overtakes the vehicle Q through the left side (S105: YES), it is determined that this overtaking operation is the dangerous operation (S106). If the vehicle speed of the vehicle Q of when the vehicle P has passed the vehicle Q is more than 100 km/h, the degree of risk of the overtaking operation that the vehicle P overtook the vehicle Q is determined as "high". If the vehicle speed of the vehicle Q of when the vehicle P has passed the vehicle Q is 50 km/h or more but 100 km/h or less, the degree of risk of the overtaking operation that the vehicle P overtook the vehicle Q is determined as "middle". If the vehicle speed of the vehicle Q of when the vehicle P has passed the vehicle Q is less than 50 km/h, the degree of risk of the overtaking operation that the vehicle P overtook the vehicle Q is determined as "low".
In this example, the right lane S corresponds to the "first lane", and the left lane T corresponds to the "second lane" and the "lane that is not close to the center of the road compared to the first lane".

As described in detail above, the driving support device 1 detects the other-vehicle 90 traveling ahead in the first lane where the host-vehicle 2 is traveling (S101: YES), if it is predicted that the other-vehicle 90 continues traveling along the road where the other-vehicle 90 is traveling (S102: YES), the other-vehicle 90 is determined as the target vehicle (S103), and the left-hand overtaking determination processing is executed (S104). If the host-vehicle 2 lane-changes to the lane that is not close to the center of the road compared to the first lane (S201: YES), passes the target vehicle (S203: YES), and lane-changes from the lane that is not close to the center of the road compared to the first lane to the first lane ahead of the target vehicle within the predetermined time (S205: YES), the left-hand overtaking operation flag is set (S207) and the overtaking operation is determined as the dangerous operation (S106).

For the overtaking operation to overtake the target vehicle as the other-vehicle 90 that is predicted to continue traveling along the road where the other-vehicle 90 is traveling, whether or not the overtaking operation is appropriate is judged based on the position relation of the lane where the host-vehicle traveled during the overtaking operation. If it has been judged that the overtaking operation is not appropriate, it is determined that the overtaking operation is the dangerous operation. Therefore, the overtaking operation is properly evaluated. Consequently, through giving appropriate feedback of driving evaluation to a driver, the technique of the driver can be improved.
The "road where the other-vehicle 90 is traveling" is not limited to the so-called link, but may be an aggregate of consecutive links in case of traveling following a road.

The driving support device 1 detects as the overtaking operation the operation that, after the host-vehicle lane-changes from the first lane to the second lane that differs from the first lane, the host-vehicle lane-changes ahead of the target vehicle from the second lane to the first lane.
Especially, in the present embodiment, if the second lane is a lane on the left side in relation to the first lane (S201: YES), that is, the second lane is a lane that is not close to the center of the road compared to the first lane, it is judged that the overtaking operation is not appropriate and the overtaking operation is determined as the dangerous operation (S106). It enables to determine the overtaking operation through the lane on the left side that is not close to the center of the road compared to the first lane as the dangerous operation.

If it has been judged based on the branch information of map information stored in the map data storage part 30 that the road does not branch within a predetermined area ahead of the host-vehicle 2, the driving support device 1 predicts that the other-vehicle 90 continues traveling along the road where the other-vehicle 90 is traveling. It enables to properly predict whether or not the other-vehicle 90 continues traveling along the road where the other-vehicle 90 is traveling.
Further, in the present embodiment, the degree of risk of the overtaking operation is determined based on the vehicle speed of the target vehicle; therefore, it is possible to properly determine the degree of risk of the dangerous operation.

The control part 10 in the present embodiment includes an "other-vehicle detection unit", a "continuation prediction unit", a "target vehicle identification unit", an "overtaking operation detection unit", and a "determination unit". S101 corresponds to the processing as a function of the "other-vehicle detection unit". S102 corresponds to the processing as a function of the "continuation prediction unit". S103 corresponds to the processing as a function of the "target vehicle identification unit". S201 to S206 correspond to the processing as a function of the "overtaking operation detection unit". S106 to S111 correspond to the processing as a function of the "determination unit".
The present invention is not limited to the above-mentioned embodiment, but can be realized with various embodiments without departing from the broad spirit and scope of the underlying principles.

### (a) Continuation prediction unit

In the present embodiment, if there is no node indicating a branch point within the second predetermined area ahead of the host-vehicle 2, it is judged that the other-vehicle 90 continues traveling along the traveling road (S102). However, whether or not the other-vehicle 90 continues traveling along the traveling road may be predicted in the following methods. Whether or not the other-vehicle 90 continues traveling along the traveling road may be predicted in one method or in combination of a plurality of methods, including the above-mentioned method.

(1) If the lighting of a turn signal of the other-vehicle 90 has been detected by the camera 86, it is predicted that the other-vehicle 90 does not continue traveling in the pre-overtaking lane. If the lighting of the turn signal of the other-vehicle 90 has not been detected, it is predicted that the other-vehicle 90 continues traveling in the pre-overtaking lane. Here, the turn signal corresponds to the "direction indicator". In other words, "the driving support device judges based on lighting status of the direction indicator of the other-vehicle whether or not the other-vehicle continues traveling along the road where the other-vehicle is traveling". Or, "the driving support device judges based on lighting status of the direction indicator of the other-vehicle whether or not the other-vehicle continues traveling in the first lane". With such configuration, it is also possible to properly predict whether or not the other-vehicle continues traveling along the traveling road.

(2) In the above-mentioned embodiment, if there is no node indicating a branch point within the second predetermined area ahead of the host-vehicle 2, it is predicted that the other-vehicle 90 continues traveling along the traveling road. However, even if there is a branch point, when the position of the pre-overtaking lane is not on the side where a branch road extends from the branch point, it may be predicted that the other-vehicle 90 continues traveling along the traveling road. For example, if the pre-overtaking lane is a lane on the right side and there is no branch to the right within the second predetermined area ahead of the host-vehicle 2, it is predicted that the other-vehicle 90 continues traveling along the traveling road. Also for the left side, it can be predicted in the same manner.

(3) In the above-mentioned embodiment, if there is no node indicating a branch point within the second predetermined area ahead of the host-vehicle 2, it is predicted that the other-vehicle 90 continues traveling along the traveling road. However, if the center divider continues in the links within the second predetermined area, it may be predicted that the other-vehicle 90 continues traveling along the traveling road.

(4) In the above-mentioned embodiment, if there is no node indicating a branch point within the second predetermined area ahead of the host-vehicle 2, it is predicted that the other-vehicle 90 continues traveling along the traveling road. However, it may be predicted based on the position of the pre-overtaking lane in the road and a road attribute of the traveling road. Specifically, if the road attribute is a highway (an automobile express national road, a freeway), a road is likely to branch on the left side. Therefore, if the road attribute of the traveling road is the highway and the position of the pre-overtaking lane is not on the far-left side in the traveling road, it may be predicted that the other-vehicle 90 continues traveling along the traveling road. In a route where a branch exists on the right side, if the position of the pre-overtaking lane is not on the far-right side in the traveling road, it may be predicted that the other-vehicle 90 continues traveling along the traveling road.

(5) If the route information indicating a route to the destination of the other-vehicle 90 is acquired, it may be judged based on the route information whether or not the other-vehicle 90 continues traveling along the traveling road. Specifically, if a route to continue traveling along the traveling road is set in the other-vehicle 90, it is predicted that the other-vehicle 90 continues traveling along the traveling road. Or, for example, when the pre-overtaking lane is the lane on the far-right side, if the destination does not exist on the right side within the second predetermined area ahead of the host-vehicle 2 according to the destination of the route information, it is predicted that the other-vehicle 90 continues traveling along the traveling road. Also for the left side, it can be predicted in the same manner.
   The route information or the destination of the other-vehicle 90 may be acquired by the inter-vehicle communication or the communication through the information center.

The second predetermined area described in the above embodiment and alternative examples may be a predetermined area ahead of the over-vehicle 90 instead of a predetermined area ahead of the host-vehicle 2. In this case, the second predetermined area is not necessary to be set larger than the first predetermined area, but may be set to any area such as 200m ahead of the other-vehicle 90.

### (6) Execution timing of continuation prediction unit

The continuation prediction unit may judge whether or not the other-vehicle 90 continues traveling along the traveling road after the left-hand overtaking determination processing. That is, the judgment at S102 in the above embodiment may be performed after S105.

### (b) Other-vehicle detection unit

In the above embodiment, the other-vehicle 90 within 300m ahead in the lane where the host-vehicle 2 is traveling is detected. However, the first predetermined area may be variable depending on the vehicle speed of the host vehicle 2. For example, the higher the vehicle speed of the host-vehicle 2 is, the larger the area to detect the other-vehicle 90 can be set. A distance acquired by multiplying the vehicle speed of the host-vehicle 2 by a predetermined factor (for example, 3) may be the predetermined area. Specifically, when the vehicle speed of the host vehicle 2 is 100km/h, the other-vehicle 90 within 300m ahead is detected. When the vehicle speed of the host vehicle 2 is 60km/h, the other-vehicle 90 within 180m ahead is detected. Or, the predetermined area may be determined based on the maximum speed of the traveling road (for example, the legal speed), instead of the vehicle speed of the host-vehicle 2.

In addition, in the above embodiment, the other-vehicle 90 within the first predetermined area is detected based on the position information of the other-vehicle 90 acquired by the communication part 50. However, the other-vehicle 90 within the first predetermined area may be detected based on the image information acquired by the camera 86 and the inter-vehicle distance information acquired by the radar device 87.

### (c) Left-hand overtaking determination processing

In the above embodiment, the lane change from the pre-overtaking lane to the left lane and the lane change from the left lane to the pre-overtaking lane ahead of the target vehicle are detected based on the lane information and the position information. However, the lane changes may be detected based on the image information acquired by the camera 86 and the inter-vehicle distance information acquired by the radar device 87, or may be detected by arbitrarily combining the position information, the lane information, the image information, the inter-vehicle distance information, and the like.

In addition, in the above embodiment, the left-hand overtaking determination processing is executed after determining the target vehicle. However, after overtaking the target vehicle was judged, the left-hand overtaking determination processing may be executed based on the information relating to the lane change stored in the information storage part 70. Specifically, following S103 in FIG. 2, the judgment at S203 in FIG. 3 is performed. After that, the judgment at S201 and S205 is performed.

### (d) Determination unit: Determination of degree of risk

In the above embodiment, the determination unit determines the degree of risk based on the vehicle speed of the target vehicle of when the host-vehicle 2 has passed the target vehicle. However, the degree of risk may be determined based on the vehicle speed of the host-vehicle 2 instead of the target vehicle.

In addition, in the above embodiment, the degree of risk is determined based on the vehicle speed of the target vehicle of when the host-vehicle 2 has passed the target vehicle. However, the degree of risk may be determined based on the vehicle speed of the target vehicle at any timing during the overtaking operation of the host-vehicle 2 (in the above embodiment, from positive judgment at S201 to the positive judgment at S205). For example, for the first predetermined speed, a maximum speed of the target vehicle during the overtaking operation of the host-vehicle 2 may be applied, and for the second predetermined speed, a minimum speed of the target vehicle during the overtaking operation of the host-vehicle 2 may be applied.

The first predetermined speed and the second predetermined speed that define an acceptable range of the vehicle speed of the target vehicle are not limited to the legal speeds, but may be speeds acquired by multiplying the legal speeds by predetermined factors. For example, the speed may be 1.1 times of the legal speed for the first predetermined speed, and 0.9 times of the legal speed for the second predetermined speed.

If the host-vehicle 2 performed the lane change 3 or more times during the overtaking operation, the degree of risk may be determined higher. In other words, "the determination unit determines the degree of risk based on the number of times of the lane change during the overtaking operation".

When detecting a ratio of vehicle speed change of the host-vehicle 2 during the overtaking operation, if the ratio of the vehicle speed change is equal to or more than a predetermined value, in other words, if a sudden acceleration or a sudden deceleration is performed, the degree of risk may be determined higher. In other words, "the determination unit determines the degree of risk based on the ratio of the vehicle speed change of the host-vehicle". The ratio of the vehicle speed change may be detected based on the vehicle speed detected by the vehicle speed sensor 84, based on the pressing level of the accelerator pedal detected by the accelerator sensor 81, or based on the pressing level of the brake pedal detected by the braking sensor 82.
Furthermore, the degree of risk may be determined higher if the difference between the host-vehicle speed and the target vehicle is high (more than a predetermined value).

If the overtaking operation has been performed through traveling a climbing lane for slower traffic or a lane for slower traffic, the degree of risk may be determined higher. In other words, "if the second lane is a lane that is temporarily provided for vehicles traveling at a low speed, the degree of risk is determined higher".

In the above embodiment, the left-hand traffic is assumed. Therefore, if the host-vehicle 2 has lane-changed to the left lane in relation to the pre-overtaking lane, passed the target vehicle, and lane-changed from the left lane to the pre-overtaking lane ahead of the target vehicle, such overtaking operation is determined as the dangerous operation. On the other hand, in case of the right-hand traffic, if the host-vehicle has lane-changed from the left lane to the right lane, passed the target vehicle, and lane-changed from the right lane to the left lane ahead of the target vehicle, such overtaking operation is determined as the dangerous operation. In this case, the left lane is the "first lane" and the right lane is the "second lane" and the "lane that is not close to the center of the road compared to the first lane".

For example, on roads in the left-hand traffic such as in Japan, it is stipulated that the lane on the left side is a driving lane and the lane on the right side that is close to the center is an overtaking lane. On the other hand, on roads in the right-hand traffic such as in the United States, it is stipulated that the lane on the right side is the driving lane and the lane on the left side that is close to the center is the overtaking lane. The right and left is inverted. However, in either case, if the host-vehicle 2 lane-changes from the overtaking lane to the driving lane, passes the target vehicle through the driving lane, lane-changes from the driving lane to the overtaking lane ahead of the target vehicle, such overtaking operation is determined as the dangerous operation. In this example, the overtaking lane is the "first lane", and the driving lane is the "second lane" and the "lane that is not close to the center of the road compared to the first lane".

### (e) Usage method of determination result

In the above embodiment, the driving evaluation is performed by calculating the driving evaluation score through subtracting a point from the basic score that is previously set if it has been determined that the overtaking operation is the dangerous operation. However, the driving evaluation may be performed by calculating the driving evaluation score through adding a point if it has been determined that the overtaking operation is not dangerous operation.
The driving evaluation result is provided with a warning if the driving evaluation score has become lower than the basic score when finishing the driving. However, the warning may be provided in a real time when the dangerous operation was performed. Or, a coordinate of a position where the driving operation determined as the dangerous operation was performed is stored, and when passing such point again, the information notifying that the dangerous operation was performed at such point may be provided to the driver to call the driver's attention. The driving evaluation result may be transmitted to the information center and a ranking may be executed by referring to driving information of other drivers.

### (f) Driving support device

In the above embodiment, the driving support device 1 includes the navigation device 3. However, the driving information of the host-vehicle 2 and the other-vehicle 90 may be transmitted to the information center and the above processing may be executed in the information center. That is, the information center may include the driving support device 1.

### (g) Overtaking operation unit

In the above embodiment, the overtaking operation unit judges in S205 and in S206 whether the vehicle has lane-changed back to the pre-overheating line within a predetermined time after having passed the target vehicle. However, steps S205 and S206 may be omitted. Therefore, a lane-change to a left line (S201) and staying on this line after having passed the target vehicle (S203) may be regarded as a situation wherein the overtaking flag is set (S207), because passing vehicles on the right may be prohibited in general (in case of left-hand traffic) if there is no branch.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device comprising
an other-vehicle detection unit (10) that is adapted to detect an other-vehicle (90, Q) traveling ahead in a first lane (S) where a host-vehicle (2, P) is traveling,
a continuation prediction unit (10) that is adapted to predict whether or not the other-vehicle (90, Q) continues traveling along a road (R) on which the other-vehicle (90, Q) is traveling,
a target vehicle identification unit (10) that, if it has been predicted that the other-vehicle (90, Q) continues traveling along the road (R), is adapted to identify the other-vehicle (90, Q) as a target vehicle,
an overtaking operation detection unit (10) that is adapted to detect an overtaking operation in which the host-vehicle (2, P) overtakes the target vehicle (90, Q), and
a determination unit (10) that, if it has been judged based on a position relation of a lane (T) on which the host-vehicle (2, P) traveled during the overtaking operation that the overtaking operation is not appropriate, is adapted to determine that the overtaking operation is a dangerous operation.

2. The driving support device according to claim 1, wherein
the overtaking operation detection unit (10) is adapted to detect as the overtaking operation an operation in which, after the host-vehicle (2, P) lane-changes from the first lane (S) to a second lane (T) that differs from the first lane (S), the host-vehicle (2, P) lane-changes ahead of the target vehicle (90, Q) from the second lane (T) to the first lane (S).

3. The driving support device according to claim 2, wherein,
if the second lane (T) is a lane that is not close to a center (C) of the road (R) compared to the first lane (S), the determination unit (10) is adapted to judge that the overtaking operation is not appropriate, and to determine that the overtaking operation is the dangerous operation.

4. The driving support device according to any one of claims 1 to 3, wherein
the continuation prediction unit (10) is adapted to predict that the other-vehicle (90, Q) continues traveling along the road R, if it has been judged based on map information that the road (R) does not branch within a predetermined area ahead of the host-vehicle (2, P).

5. The driving support device according to any one of claims 1 to 4, wherein
the continuation prediction unit (10) is adapted to judge a lighting status of a direction indicator of the other-vehicle (90, Q), and to predict that the other-vehicle (90, Q) continues traveling along the road (R) if the direction indicator is not lighted.

6. The driving support device according to any one of claims 1 to 5, wherein
the determination unit (10) is adapted to determine a degree of risk of the dangerous operation based on a speed of the host-vehicle (2, P) and/or a speed of the target vehicle (90, Q).

7. A driving support method comprising the steps of
detecting an other-vehicle (90, Q) traveling ahead in a first lane (S) where a host-vehicle (2, P) is traveling,
predicting whether or not the other-vehicle (90, Q) continues traveling along a road (R) on which the other-vehicle (90, Q) is traveling,
identifying, if it has been predicted that the other-vehicle (90, Q) continues traveling along the road (R), the other-vehicle (90, Q) as a target vehicle,
detecting an overtaking operation in which the host-vehicle (2, P) overtakes the target vehicle (90, Q), and
determining, if it has been judged based on a position relation of a lane (T) on which the host-vehicle (2, P) traveled during the overtaking operation that the overtaking operation is not appropriate, that the overtaking operation is a dangerous operation.

8. The driving support method according to claim 7, further comprising the steps of detecting as the overtaking operation an operation in which, after the host-vehicle (2, P) lane-changes from the first lane (S) to a second lane (T) that differs from the first lane (S), the host-vehicle (2, P) lane-changes ahead of the target vehicle (90, Q) from the second lane (T) to the first lane (S).

9. The driving method according to claim 8. further comprising the steps of
judging that the overtaking operation is not appropriate, and determining that the overtaking operation is the dangerous operation, if the second lane (T) is a lane that is not close to a center (C) of the road (R) compared to the first lane (S).

10. The driving support method according to any one of claims 7 to 9, further comprising the steps of
predicting that the other-vehicle (90, Q) continues traveling along the road (R), if it has been judged based on map information that the road (R) does not branch within a predetermined area ahead of the host-vehicle (2, P).

11. The driving support method according to any one of claims 7 to 10, further comprising the steps of
judging a lighting status of a direction indicator of the other-vehicle (90, Q), and predicting that the other-vehicle (90, Q) continues traveling along the road (R) if the direction indicator is not lighted.

12. The driving support method according to any one of claims 7 to 11, further comprising the step of
determining a degree of risk of the dangerous operation based on a speed of the host-vehicle (2. P) and/or a speed of the target vehicle (90, Q).

13. A program comprising program code which, when run on a computer causes the computer to execute the steps of method claims 7 to 12.
